# EUROPEAN PATENT APPLICATION

(11) **EP 2 636 308 A1**
(43) Date of publication of application: **11.09.2013**
(21) Application number: 13158392.4
(22) Date of filing: 08.03.2013
(51) Int. Cl.: A21C 3/06, A21C 7/01

(54) **Assembly and method for moulding a dough portion**

(30) Priority: 08.03.2012 NL 2008432; 27.03.2012 NL 2008552
(71) Applicant: Kaak, Johan Hendrik Bernard, 7011 DZ Gaanderen (NL)
(72) Inventor: Van Vugt, Antonius Wilhelmus Adrianus Josephus, 5251 VD VLIJMEN (NL); Benders, Koen, 5298 CK LIEMPDE (NL)
(74) Representative: Peters, Sebastian Martinus

(57) **Abstract**

Assembly and method for moulding dough portions, wherein the assembly comprises:
a rolling device comprising a conveyor belt and a surface placed spaced apart above it, for passing through the dough portion in between the conveyor belt and the surface and rolling it into a roll of dough, wherein, in a direction transverse to a conveyance direction of the conveyor belt, the surface is placed at an acute angle to the conveyor belt for moulding a conical roll of dough;
a roller assembly for sheeting the conical roll of dough into a dough sheet;
a supply device for supplying the first roll of dough to the roller assembly in a supply direction that is parallel to a longitudinal direction of the first roll of dough and substantially transverse to the centre line of the rollers of the roller assembly; and
a discharge device for receiving the sheeted dough sheet, wherein the discharge device comprises a coiling device for coiling up the dough sheet into a second roll of dough.

## Description

### BACKGROUND OF THE INVENTION

The invention relates to an assembly and a method for moulding a dough portion, particularly for sheeting the dough portion into a dough sheet and subsequently coiling up the dough sheet into a roll of dough.

Such a device and method are for instance known from British Patent 1 328 790. In that document among others a method is described wherein a lump of dough is placed on a first belt conveyor and fed between the first belt conveyor and a pressure board placed above it for transforming the lump of dough into a cylindrical roll of dough. Said roll of dough is subsequently fed to a set of rollers for sheeting the roll of dough into a dough sheet, wherein the roll of dough is fed with the longitudinal centre line of the roll of dough at right angles to the centre lines of the rollers. The dough sheet is placed on a further belt conveyor above which a mail chain coiling device has been placed for in between the mail chain coiling device and the further belt conveyor coiling up the dough sheet into a roll of dough that is subsequently fed to a bread pan.

When moulding a dough portion among others the following properties of the moulded dough strand are of importance: the homogeneity of the dough, the thickness of the dough sheet, the shape of the two outer ends of the coiled up dough portion and the shape of the outer end of the dough sheet on the outside of the roll of dough, the so-called seam. Said properties should not vary too much from one dough portion to the next.

A problem in the known devices and methods for moulding dough portions is that the dough portions moulded by them vary too much regarding these properties.

As such a device is also used for moulding proofed dough portions, it is desirable that the dough texture after proofing is not disrupted too much by the moulding process.

### SUMMARY OF THE INVENTION

It is an object of the present invention to improve on at least one of these aspects.

According to a first aspect the invention for that purpose provides an assembly for moulding dough portions as described in claim 1. The assembly according to the invention comprises:
a rolling device comprising a first belt conveyor for supporting the dough portion, and a surface placed spaced apart above a conveyor belt of the first belt conveyor, for passing through the dough portion in between the first belt conveyor and the surface and rolling the dough portion into a first roll of dough, wherein, at least in a direction transverse to a conveyance direction of the first belt conveyor, the surface is placed at an acute angle to the conveyor belt of the first belt conveyor for moulding a substantially conical first roll of dough;
a roller assembly comprising at least two rollers for in between them rolling out the first roll of dough into a dough sheet, wherein the centre lines of the rollers are placed substantially parallel to a first direction;
a supply device for supplying the first roll of dough to the roller assembly in a supply direction that is substantially parallel to a longitudinal direction of the first roll of dough and substantially transverse to the first direction; and
a discharge device for receiving the rolled out dough sheet, wherein the discharge device comprises a coiling device for coiling up the dough sheet into a second roll of dough.

Due to the conical shape of the first roll of dough the dough sheet has a better shape after the roller assembly, meaning a more rectangular shape. After coiling up this results in a second roll of dough having a more consistent diameter over the length of the second roll of dough and thus substantially in a straight cylindrical second roll of dough.

Moreover after coiling up the dough sheet having the more rectangular shape, a second roll of dough is obtained having a less bent or curved seam. Preferably the second roll of dough is placed such in the bread pan that the seam is not visible at the upper side of the bread pan. By means of the known device an seam is obtained that due to its curve is situated over a substantial part of the circumferential direction of the roll of dough, as a result of which the roll of dough has to be placed accurately in the bread pan in order for the seam to fully face the bottom wall. By means of the device according to the invention a second roll of dough is obtained having a more straight seam, as a result of which there is a larger margin for correctly placing the second roll of dough in the bread pan and the roll of dough can be placed in the bread pan with less accuracy.

In one embodiment a calibration assembly is placed between the supply device and the roller assembly, wherein the calibration assembly comprises two rolls placed spaced apart from each other, wherein the centre lines of the rolls are placed substantially parallel to a second direction and wherein the second direction is substantially transverse to the first direction and to the supply direction, wherein the distance between the rolls preferably is smaller than or equal to a distance between the surface and the first belt conveyor. The distance between the surface and the first belt conveyor in this description means the distance between the surface and the part of the conveyor belt of the first belt conveyor that faces the surface. Preferably the distance between the rolls is smaller than or equal to the maximum distance between the surface and the first belt conveyor, preferably smaller than or equal to the average distance between the surface and the first belt conveyor, preferably smaller than or equal to the smallest distance between the surface and the first belt conveyor.

The assembly according to the invention and particularly the calibration assembly provides more control over the dough piece during moulding it. Particularly moulding the dough piece into a conical first roll of dough, in combination with centring, calibrating and retaining the conical first roll of dough by the calibration assembly prior to and during rolling out provides a highly reproducible process.

The calibration assembly ensures centring the first roll of dough prior to sheeting, as a result of which the dough sheet and the coiled up second roll of dough are placed reproducibly on the same path on the discharge device.

The calibration device ensures calibration, adjusting the width of the dough sheet. In that way the assembly according to the invention provides dough sheets having a reproducible and consistent width, as a result of which the coiled up second rolls of dough have a more consistent shape than is the case in the known devices.

Finally the calibration device ensures the retaining of the first roll of dough prior to and during sheeting, and thus also defines the length of the dough sheet. In that way the assembly according to the invention provides dough sheets having a reproducible and consistent length, as a result of which the second rolls of dough have a more consistent shape than is the case in the known devices.

In that way variations in the width of the dough sheet and variations in the length of the dough sheet after sheeting can be kept within limits. This results in the coiled up second rolls of dough acquiring a highly reproducible cylindrical shape.

It has also been found that the dough products, particularly after baking them, have a fine dough texture, which is an indication of the dough texture not being disrupted too much after proofing as a result of the moulding process in the assembly according to the invention.

In one embodiment the two rolls are each rotatable about their respective centre lines and the calibration device is adapted for providing a conveyance speed of the rolls that is lower than a conveyance speed of the roller assembly, and/or for providing a conveyance speed of the rolls that exceeds or equals a conveyance speed of the supply device. The degree of retaining the elongated dough piece is also defined by the relation between the conveyance speed of the rolls and the conveyance speed of the roller assembly, also called sheeting speed. In this description the conveyance speed of the rolls means the circumferential speed of the rolls, at least at the location where the rolls engage and convey the dough.

In order to ensure that the rolls are able to adequately retain the first roll of dough, the distance between the rolls preferably is smaller than or equal to a cross-sectional diameter of the first roll of dough. Preferably the distance between the rolls is smaller than or equal to the maximum cross-sectional diameter of the first roll of dough, preferably smaller than or equal to the average cross-sectional diameter of the first roll of dough, preferably smaller than or equal to the smallest cross-sectional diameter of the first roll of dough.

The rolls may also be provided with a textured surface for providing increased friction between the surface of the rolls and a dough piece.

In one embodiment the two rolls are provided with a drive mechanism for driving the rolls in opposite direction, wherein the conveyance speed of the rolls preferably is adjustable. In that way the length of the sheeted dough sheet can be influenced.

In one embodiment the distance between the rolls is adjustable. In that way it is possible to use the assembly according to the invention for elongated dough pieces having different cross-sectional diameters.

In one embodiment the rolling device is provided with side guides placed between the conveyor belt and the surface, so that the first roll of dough is properly calibrated, meaning that it has the desired length corresponding with the distance between the side guides.

In one embodiment the acute angle is placed such that a diameter of a cross-section of the conical first roll of dough becomes smaller in the supply direction. The conical first roll of dough preferably is passed to the calibration assembly and subsequently to the roller assembly with the outer end having the smallest diameter upfront.

In one embodiment a conveyance direction of the first belt conveyor is placed substantially transverse to the supply device. In that way a dough ball is first treated in a first direction into a conical first roll of dough, which is subsequently sheeted and coiled up in a second direction, wherein the second direction is at least substantially perpendicular to the first direction. Such a treatment in two directions also contributes to the fine dough texture of the dough products after baking.

In one embodiment the surface is formed by a pressure board or a further conveyor belt of a further belt conveyor. Optionally the further conveyor belt of the further belt conveyor facing the first belt conveyor can be driven in opposite direction relative to the conveyor belt of the first belt conveyor.

In one embodiment the surface is placed substantially at a fixed distance above the conveyor belt. In one embodiment the distance between the surface and the conveyor belt is adjustable, preferably depending on the weight of the dough ball. Preferably the distance is adjusted such that the dough ball is transformed into the conical first roll of dough substantially without degassing the dough.

In a simple embodiment the supply device comprises a second belt conveyor.

In one embodiment the roller assembly comprises a pressure roller and a counter roller. Preferably, but not necessarily, a circumference of the pressure roller is smaller than a circumference of the counter roller.

In a simple embodiment the discharge device comprises a third belt conveyor. In one embodiment the coiling device comprises a coiling net or mail chain coiling device.

In one embodiment side guides are placed on both sides of the coiling device, wherein the distance between the side guides preferably is adjustable. Said side guides ensure that the coiled-up second roll of dough is properly calibrated, that means having the desired length corresponding with the distance between the side guides.

It may furthermore be advantageous to subsequently feed the coiled-up second roll of dough to a further device for treating a roll of dough, that is placed after or on the discharge device. Preferably said further device comprises a fourth belt conveyor for supporting the second roll of dough, wherein spaced apart above the conveyor belt of the fourth belt conveyor a surface has been placed, for passing through the second roll of dough between the fourth belt conveyor and the surface.

According to a second aspect the invention provides a method for moulding a dough portion as described in claim 11. The method comprises the steps of:
providing a dough portion;
passing through the dough portion in between a conveyor belt of a first belt conveyor and a surface placed spaced apart above the conveyor belt, for moulding a first roll of dough, wherein, at least in a direction transverse to a conveyance direction of the first belt conveyor, the surface is placed at an acute angle to the conveyor belt of the first belt conveyor for moulding a substantially conical first roll of dough;
supplying the first roll of dough to a roller assembly, wherein a supply direction for supplying the first roll of dough is substantially parallel to a longitudinal direction of the first roll of dough;
rolling out the first roll of dough into a dough sheet, wherein the centre lines of the rollers of the roller assembly are placed substantially parallel to a first direction;
receiving the rolled out dough sheet on a discharge device, wherein the discharge device comprises a coiling device that coils up the dough sheet into a second roll of dough.

In one embodiment the acute angle is placed such that a diameter of a cross-section of the conical first roll of dough becomes smaller in the supply direction.

In one embodiment a calibration assembly is placed between the supply device and the roller assembly, wherein the calibration assembly is adapted for calibrating and retaining the first roll of dough, wherein the calibration assembly comprises two rolls placed spaced apart from each other, wherein the centre lines of the rolls are placed substantially parallel to a second direction, wherein the second direction is substantially transverse to the first direction, and wherein the distance between the rolls preferably is smaller than or equal to a distance between the surface and the first belt conveyor.

In one embodiment the two rolls are each rotatable about their respective centre lines and are adapted for providing a conveyance speed of the rolls that is lower than a sheeting speed or rolling out speed, and/or for providing a conveyance speed of the rolls that exceeds or equals a speed of supplying.

In one embodiment the two rolls are provided with a drive mechanism for driving the rolls in opposite direction, wherein the conveyance speed of the rolls preferably is adjustable.

The effects and advantages of the embodiments of the method according to the invention described above equal the effects and advantages of the corresponding embodiments of the device according to the device.

The aspects and measures described in this description and the claims of the application and/or shown in the drawings of this application may where possible also be used individually. Said individual aspects and other aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached drawings, in which:
Figures 1 and 2 show a schematic side view, partially in cross-section, and a schematic top view, respectively, of an assembly for moulding dough pieces according to a first embodiment, and
Figures 3 and 4 show a schematic side view, partially in cross-section, and a schematic top view, respectively, of an assembly for moulding dough pieces according to a second embodiment.

### DETAILED DESCRIPTION OF THE DRAWINGS

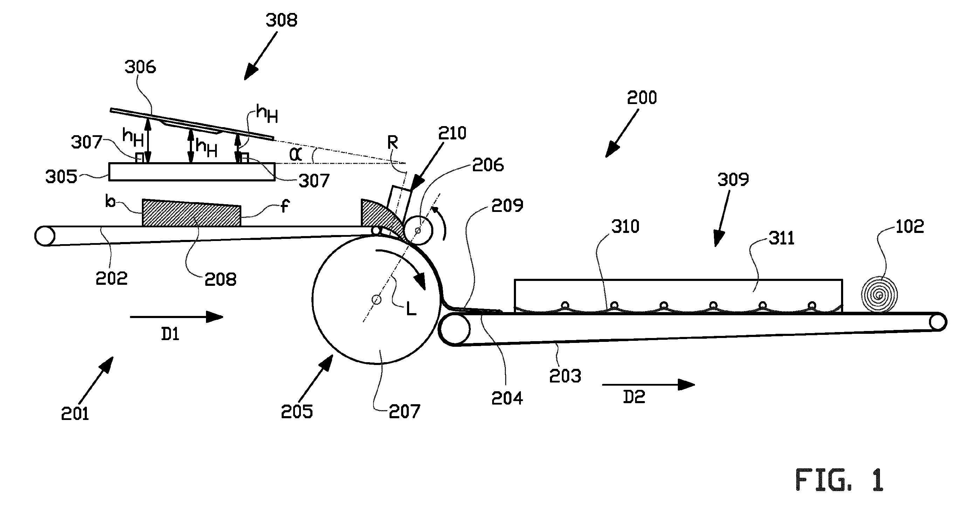

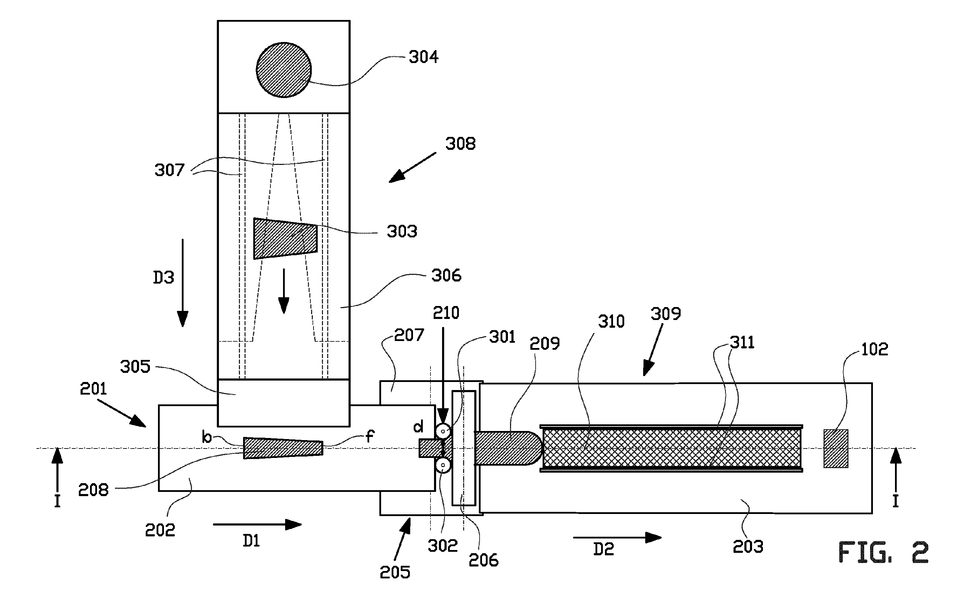

Figures 1 and 2 schematically show a top view and a side view, respectively, of an assembly for moulding dough according to a first embodiment of the invention. Figure 1 shows a view in cross-section along line I-I in figure 2. In figures 1 and 2 the dough is shown at various points in time in the moulding process.

The assembly 200 comprises a device for providing an elongated dough piece 308. To said device a dough ball 304 is supplied to a rolling device 308, for instance after the dough has proofed. The rolling device 308 comprises a first conveying device in the form of a belt conveyor 305 for supporting the dough ball 304. Spaced apart above the belt conveyor 305 a pressure board has been placed, that optionally on the side facing the belt conveyor 305 can be provided with a wedge-shaped thickening (indicated by a dotted line in figure 2) that also ensures that the dough of the dough ball 304 is pressed sideward for moulding a first roll of dough 208. Between the pressure board 306 and belt conveyor 305 the dough piece 303 will be subjected to a rolling motion, resulting in an elongated roll of dough 208.

Furthermore two side guides 307 have been placed between the pressure board 306 and the belt conveyor 305, which side guides extend in the transport direction D3 of the first conveyor belt 305.

As shown in figure 1 the pressure board 306 is placed at an acute angle α to the first conveyor belt 305, or in other words: the pressure board is placed inclined in a direction perpendicular to the transport direction D3 of the first conveyor belt 305.

By using said pressure board 306 roll of dough 208 has a conical shape on the second conveyor belt 202 of the supply device 201. The elongated conical roll of dough 208 is placed such on the second conveyor belt 202 that the longitudinal direction of said roll of dough 208 runs substantially parallel to the conveyance direction D1 of the second conveyor belt 202, wherein in the conveyance direction D1 a leading outer end f of the conical shape is narrower than a trailing outer end b of the conical roll of dough. Said conical shape is schematically shown in figures 1 and 2.

In the embodiment of figures 1 and 2 a conveyance direction (indicated by arrow D3) of the first conveyor belt 305 is substantially perpendicular to the conveyance direction D1 of the second conveyor belt 202. In that way it is not necessary to turn the elongated dough piece 208 in order to bring it into the wanted position on the supply device 201.

The second belt conveyor 202 supplies the elongated dough piece 208 to the roller assembly 205. The roller assembly 205 comprises a pressure roller 206 and a counter roller 207. In the embodiment of figures 1 and 2 a circumference of the pressure roller 206 is smaller than a circumference of the counter roller 207.

Before the elongated dough piece 208 arrives at the rollers 206, 207, it first has to pass by the calibration assembly 210. The calibration assembly 210 comprises a first roll 301 and a second roll 302. The rolls 301, 302 are disposed between the supply device 201 and the pressure roller 206, preferably between the second conveyor belt 202 and the pressure roller 206.

In the embodiment of figures 1 and 2 a circumference of the first roll 301 is substantially equal to a circumference of a second roll 302. The axes of rotation of the first roll 301 and second roll 302 are substantially perpendicular to the axes of rotation R of the pressure roller 206 and the counter roller 207.

The calibration assembly 210 is adapted for centring and calibrating the dough portion 208 in a direction that is substantially perpendicular to the supply direction D1. Said direction is in the plane of drawing in figure 2 and is perpendicular to the plane of drawing in figure 1.

In order to ensure that the rolls 301, 302 are able to adequately retain the first roll of dough 208, the distance d between the rolls 301, 302 preferably is smaller than or equal to a cross-sectional diameter of the first roll of dough 208. The cross-sectional diameter of the first roll of dough 208 is also defined by adjusting the distance between the surface 306 and the first belt conveyor 305. Preferably the distance d between the rolls 301, 302 is smaller than or equal to a distance between the surface 306 and the first belt conveyor 305. Preferably the distance between the rolls d is smaller than or equal to the maximum distance h_{H} between the surface 306 and the first belt conveyor 305 at one of the side guides 307, preferably smaller than or equal to the average distance h_{M} between the surface 306 and the first belt conveyor 305 halfway between the side guides 307, preferably smaller than or equal to the smallest distance h_{L} between the surface 306 and the first belt conveyor 305 at one of the side guides 307, as schematically shown in figure 1.

The calibration assembly 210 conveys the dough portion 208 at a certain conveyance speed, that preferably is lower than the conveyance speed of the roller assembly 205 and/or higher than or equal to the conveyance speed of the supply device 201. The conveyance speed of the rolls 301, 302 can for instance be adjusted to be 10% to 20% higher than the supply speed of the second conveyor belt 202, and the sheeting speed of the roller assembly 206, 207 is three times higher than the supply speed of the second conveyor belt 202. Preferably the rolls 301, 302 are coupled to a drive mechanism (not shown) for driving the rotation of the rolls 301, 302 at the desired adjustable speed. As the speed of the rolls 301,302 is lower than the sheeting speed, the rolls 301, 302 will retain the dough piece and decelerate the trailing part, at least during a part of sheeting into the dough sheet 209.

The roller assembly 205 rolls out dough portion 208 into dough sheet 209 and presses the dough portion together in a pressure direction. Said pressure direction is in the plane of drawing in figure 1 and is perpendicular to the plane of drawing in figure 2, and is situated along a line segment connecting the centre line of the pressure roller 206 to the centre line of the counter roller 207.

Subsequently the dough sheet 209 is supplied to a discharge device 309, comprising a third belt conveyor 203, that is provided with a coiling device 310. The coiling device 310 comprises an elongated piece of coiling net placed between two side guides 311.

The coiling device 310 is adapted for coiling up the dough sheet 209 into a coiled-up second roll of dough 102. A coil-up axis of the second roll of dough 102 is then perpendicular to the conveyance direction D2 of the third conveyance device 203.

The above-mentioned also describes a method, which comprises the following steps of:
providing a dough portion 304;
passing through the dough portion 303 in between a conveyor belt of a first belt conveyor 305 and a pressure board 306 placed spaced apart above the conveyor belt, for moulding a first roll of dough 208, wherein, at least in a direction transverse to a conveyance direction D3 of the first belt conveyor 305, the pressure board 306 is placed at an acute angle α to the conveyor belt of the first belt conveyor 305 for moulding a substantially conical first roll of rough 208;
supplying the first roll of dough 208 to a roller assembly 206, 207, wherein a supply direction D1 for supplying the first roll of dough 208 is substantially parallel to a longitudinal direction of the first roll of dough 208;
rolling out the first roll of dough 208 into a dough sheet 209, wherein the centre lines of the rollers 206, 207 of the roller assembly are placed substantially parallel to a first direction D3; and
receiving the rolled out dough sheet 209 on a discharge device 309, wherein the discharge device 309 comprises a coiling device 310 that coils up the dough sheet 209 into a second roll of dough 102.

A calibration assembly 210 is placed between the supply device 201 and the roller assembly 205, which calibration assembly is adapted for calibrating and retaining the elongated dough piece 208, wherein the calibration assembly 210 comprises two rolls 301, 302 that are placed spaced apart from each other, wherein the centre lines R of the rolls 301, 302 are placed substantially parallel to a second direction and wherein the second direction is substantially transverse to the first direction.

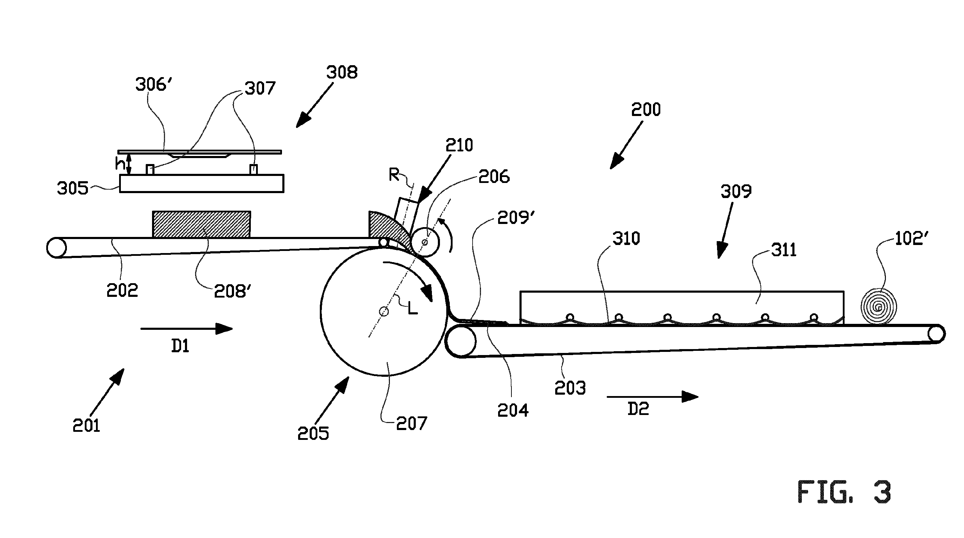

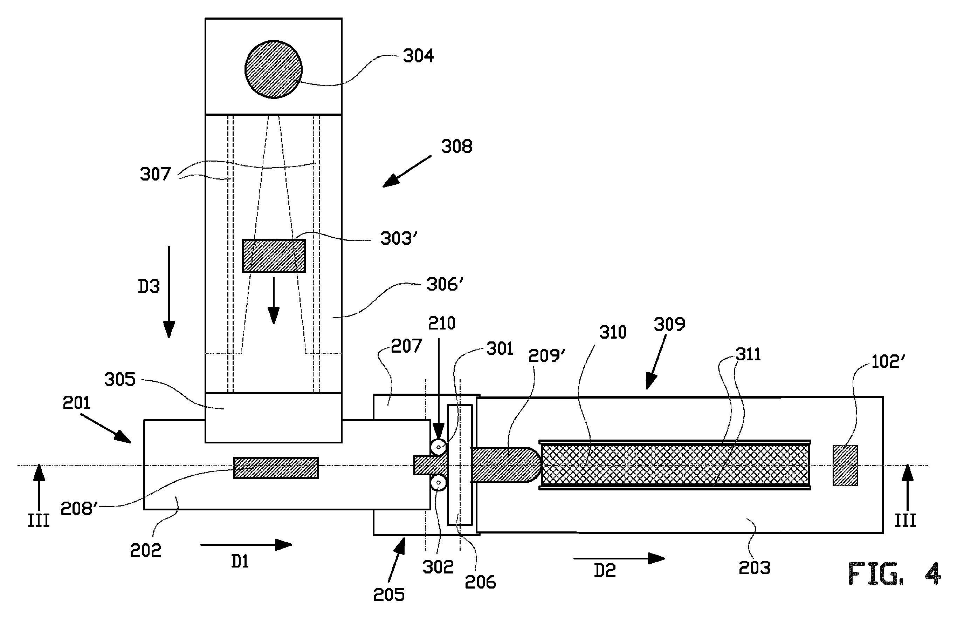

Figures 3 and 4 schematically show a top view and a side view, respectively, of an assembly for moulding dough according to a second embodiment. Said second embodiment largely corresponds with the first embodiment. Only the pressure board 306' is now placed parallel to the first conveyor belt 305, at least considered in a direction perpendicular to the conveyance direction D3 of the first conveyor belt 305. By using said pressure board 306' dough portion 208' has a cylindrical shape on the second conveyor belt 202 of the supply device 201. The elongated cylindrical dough piece 208' is placed such on the second conveyor belt 202 that the longitudinal direction of said dough piece 208' runs substantially parallel to the conveyance direction D1 of the second conveyor belt 202. Said cylindrical shape is schematically shown in figures 3 and 4.

Thus figures 3 and 4 show an assembly for moulding dough portions comprising:
a rolling device 308 comprising a first belt conveyor for supporting a dough portion 304, and a surface 306' placed spaced apart above a conveyor belt 305 of the first belt conveyor, for passing through the dough portion 303' in between the first belt conveyor and the surface 306', and rolling the dough portion into a first roll of dough 208';
a roller assembly 205 comprising at least two rollers 206, 207 for in between them sheeting the first roll of dough 208' into a dough sheet 209', wherein the centre lines of the rollers are placed substantially parallel to a first direction;
a supply device 201 for supplying the first roll of dough 208' to the roller assembly 205 in a supply direction D1 that is substantially parallel to a longitudinal centre line of the first roll of dough 208' and substantially transverse to the first direction D1;
a discharge device 309 for receiving the sheeted dough sheet 209', wherein the discharge device comprises a coiling device 310, 311 for coiling up the dough sheet 209' into a second roll of dough 102', wherein a calibration assembly 210 is placed between the supply device 201 and the roller assembly 205, wherein the calibration assembly 210 comprises two rolls 301, 302 that are placed at distance d from each other, wherein the centre lines R of the rolls 301, 302 are placed substantially parallel to a second direction and wherein the second direction is substantially transverse to the first direction D1, wherein the distance d between the rolls 301, 302 is smaller than or equal to a distance h between the surface 306' and the first belt conveyor 305.

The above description is included to illustrate the operation of preferred embodiments of the invention and not to limit the scope of the invention. Starting from the above explanation many variations that fall within the spirit and scope of the present invention will be evident to an expert.

Summarising this invention relates to an assembly and a method for moulding dough portions, wherein the assembly comprises:
a rolling device comprising a conveyor belt and a surface placed spaced apart above it, for passing through the dough portion in between the conveyor belt and the surface and rolling it into a roll of dough, wherein, in a direction transverse to a conveyance direction of the conveyor belt, the surface is placed at an acute angle to the conveyor belt for moulding a conical roll of dough;
a roller assembly for sheeting the conical roll of dough into a dough sheet;
a supply device for supplying the first roll of dough to the roller assembly in a supply direction that is parallel to a longitudinal direction of the first roll of dough and substantially transverse to the centre line of the rollers of the roller assembly; and
a discharge device for receiving the sheeted dough sheet, wherein the discharge device comprises a coiling device for coiling up the dough sheet into a second roll of dough.

## Claims

1. Assembly for moulding dough portions comprising:
a rolling device comprising a first belt conveyor for supporting a dough portion, and a surface placed spaced apart above a conveyor belt of the first belt conveyor, for passing through the dough portion in between the first belt conveyor and the surface and rolling the dough portion into a first roll of dough;
a roller assembly comprising at least two rollers for in between them rolling out the first roll of dough into a dough sheet, wherein the centre lines of the rollers are placed substantially parallel to a first direction;
a supply device for supplying the first roll of dough to the roller assembly in a supply direction that is substantially parallel to a longitudinal centre line of the first roll of dough and substantially transverse to the first direction;
a discharge device for receiving the rolled out dough sheet, wherein the discharge device comprises a coiling device for coiling up the dough sheet into a second roll of dough, **characterised in that**
at least in a direction transverse to a conveyance direction of the first belt conveyor, the surface of the rolling device is placed at an acute angle to the conveyor belt of the first belt conveyor for moulding a substantially conical first roll of dough.

2. Assembly according to claim 1, wherein a calibration assembly is placed between the supply device and the roller assembly, wherein the calibration assembly comprises two rolls placed spaced apart from each other, wherein the centre lines of the rolls are placed substantially parallel to a second direction and wherein the second direction is substantially transverse to the first direction, wherein the distance between the rolls preferably is smaller than or equal to a distance between the surface and the first belt conveyor.

3. Assembly according to claim 2, wherein the two rolls are each rotatable about their respective centre lines and are adapted for providing a conveyance speed of the rolls that is lower than a conveyance speed of the roller assembly, and/or for providing a conveyance speed of the rolls that exceeds or equals a conveyance speed of the supply device.

4. Assembly according to claim 2 or 3, wherein the two rolls are provided with a drive mechanism for driving the rolls in opposite direction, wherein the conveyance speed of the rolls preferably is adjustable.

5. Assembly according to claim 2, 3 or 4, wherein the distance between the rolls is adjustable.

6. Assembly according to any one of the preceding claims, wherein the acute angle is placed such that a diameter of a cross-section of the conical first roll of dough becomes smaller in the supply direction.

7. Assembly according to any one of the preceding claims, wherein a conveyance direction of the first belt conveyor is placed substantially transverse to the supply device.

8. Assembly according to any one of the preceding claims, wherein the surface is formed by a pressure board or a further conveyor belt of a further belt conveyor.

9. Assembly according to any one of the preceding claims, wherein the roller assembly comprises a pressure roller and a counter roller, wherein preferably a circumference of the pressure roller is smaller than a circumference of the counter roller.

10. Assembly according to any one of the preceding claims, wherein the coiling device comprises a coiling net and/or wherein side guides are placed on both sides of the coiling device, wherein the distance between the side guides preferably is adjustable.

11. Method for moulding a dough portion comprising the steps of:
providing a dough portion;
passing through the dough portion in between a conveyor belt of a first belt conveyor and a surface placed spaced apart above the conveyor belt, for moulding a first roll of dough;
supplying the first roll of dough to a roller assembly, wherein a supply direction for supplying the first roll of dough is substantially parallel to a longitudinal direction of the first roll of dough;
rolling out the first roll of dough into a dough sheet, wherein the centre lines of the rollers of the roller assembly are placed substantially parallel to a first direction;
receiving the rolled out dough sheet on a discharge device, wherein the discharge device comprises a coiling device that coils up the dough sheet into a second roll of dough, **characterised in that**
at least in a direction transverse to a conveyance direction of the first belt conveyor, the surface is placed at an acute angle to the conveyor belt of the first belt conveyor for moulding a substantially conical first roll of dough.

12. Method according to claim 11, wherein the acute angle is placed such that a diameter of a cross-section of the conical first roll of dough becomes smaller in the supply direction.

13. Method according to claim 11 or 12, wherein a calibration assembly, placed between the supply device and the roller assembly, is adapted for calibrating and retaining the first roll of dough, wherein the calibration assembly comprises two rolls placed spaced apart from each other, wherein the centre lines of the rolls are placed substantially parallel to a second direction, wherein the second direction is substantially transverse to the first direction, and wherein the distance between the rolls preferably is smaller than or equal to a distance between the surface and the first belt conveyor.

14. Method according to claim 11, 12 or 13, wherein the two rolls are each rotatable about their respective centre lines and are adapted for providing a conveyance speed of the rolls that is lower than a rolling out speed, and/or for providing a conveyance speed of the rolls that exceeds or equals a speed of supplying.

15. Assembly according to claim 11, 12, 13 or 14, wherein the two rolls are provided with a drive mechanism for driving the rolls in opposite direction, wherein the conveyance speed of the rolls preferably is adjustable.
